# EUROPEAN PATENT APPLICATION

(11) **EP 2 007 142 A2**
(43) Date of publication of application: **24.12.2008**
(21) Application number: 07738335.4
(22) Date of filing: 12.03.2007
(51) Int. Cl.: H04N 7/173, H04L 12/56, H04N 7/26

(54) **APPARATUS AND METHOD FOR PROCESSING DIGITAL IMAGE DATA**

(30) Priority: 17.03.2006 JP 2006073623
(71) Applicant: Pioneer Corporation, Tokyo 153-8654 (JP)
(72) Inventor: TANAKA, Yoshitaka, Tsurugashima-shi, Saitama 350-2288 (JP)
(74) Representative: Haley, Stephen
(86) International application number: PCT/JP2007/054863
(87) International publication number: WO 2007/119335

(57) **Abstract**

A PTS specific to a nonIDR-AU is decided at step S170 by the use of an offset value Local_PTS and a PES_PTS of a corresponding IDR-AU. If an IDR_pts of the IDR-AU has failed to be acquired, a Dec_PTS decided at step S170 is incorrect. Thus, the reference value IDR_pts of the IDR-AU corresponding to the nonIDR-AU is calculated at steps S50 to S100. By re-calculating correctly the IDR_pts of the IDR-AU as stated above, it is possible to re-decide correctly the Dec_PTS of the nonIDR-AU at step S170.

## Description

### Technical Field

The present invention relates to a digital image data processing apparatus and processing method for digitally processing a plurality of data packets in which coded data is packetized in a variable-length manner.

### Background Art

There has been already commenced a digital broadcast in which video data and audio data are digitized, multiplexed and transmitted by the use of digital or Internet receivers, for example. In such a digital broadcast, a predetermined compression coding scheme (e.g. Moving Picture Expert Group: MPEG or the like) is employed to multiplex data of a plurality of programs into a stream according to the coding scheme (e.g. MPEG transport stream: MPEG-TS) and transmit the same. From the data thus multiplexed and transmitted as a stream, desired data is selectively extracted at a receiver that has received the stream. At this time, time information (reproduction time information) is successively affixed to the received data for each image frame, for example. A decryption apparatus performs a decode process on the data using the time information, whereby it is possible to decrypt and reproduce frames in a manner which is consistent with time ordering.

As a measure for cases where a problem has occurred in processing the production time information for some reason, there has been proposed a technique of correcting the problem, as described in Patent Document 1, for example. This prior art is directed to create reproduction time information (PTS) based on a reception time, and more particularly, is disigned to correct the reproduction time information using a difference between a receipt time and a reproduction time to thereby eliminate an error due to clock jitter.

Patent Document 1: JP, A, 2004-282569

### DISCLOSURE OF INVENTION

### Subject to be solved by the invention

In recent years, with further developments in broadbandization, it has been planned to deliver moving pictures in a simple manner by the use of digital or Internet broadcast receivers of relatively simplified structures such as cellular phones or other mobile devices. In this case, data transmission quantity is functionally limited to a certain extent, and thus a plurality of data packets in which coded data is packetized in a variable-length manner are transmitted. In addition, due to the limitation, it is impossible to affix reproduction time information to each frame as mentioned above, for example. Thus reference reproduction time information is affixed to each predetermined unit of frame data (e.g. several frames to several tens of frames), and an offset value from the reproduction time information is affixed to other frames, so that it is possible to calculate an actual reproduction time specific to each frame.

This transmission mode offers an advantage in that total transmission quantity required for reproduction time information can be reduced. However, if some reproduction time information affixed (to each predetermined unit of frame data) has failed to be acquired for some reason, it is impossible to reproduce images (of units of several frames to several tens of frames) until the next reproduction time information is received and acquired. Therefore, it will take relatively long time to return to normal video picture reproduction, thereby interfering with the convenience of a user's operation.

The foregoing prior art, under the assumption that the reproduction time information is affixed to each data, merely corrects simple clock jitter occurring at the time of the affixation, and does not deal with situations in which data reception becomes disabled when the reproduction time information is affixed to each predetermined unit of data as described above.

The above described problem is given as one of examples the present invention should solve.

### Means for solving the subject

To solve the foregoing problem, the invention according to claim 1 is a digital image data processing apparatus for processing a stream of a plurality of data packets in which coded data is packetized in a variable-length manner, said plurality of data packets including: a reference packet having a header with reproduction time information, reference frame data containing reproduction time information virtually identical to the reproduction time information in the header as a reference value, and non-reference frame data containing an offset value of the reproduction time information with respect to the reference value; and a non-reference packet having the header and the non-reference frame data, wherein said digital image data processing apparatus is characterized by comprising: decision means for deciding reproduction time information specific to the non-reference frame data by the use of the offset value with respect to the reference value contained in the non-reference frame data; determination means for determining whether the specific reproduction time information decided by the decision means is correct or not; and calculation means for calculating the reference value contained in the reference frame data, corresponding to the non-reference frame data, if the determination means has not determined that the specific reproduction time information is correction impossible.

Besides, to solve the foregoing problem, the invention according to claim 5 is a digital image data processing method for processing a stream of a plurality of data packets in which coded data is packetized in a variable-length manner, said plurality of data packets including: a reference packet having a header with reproduction time information, reference frame data containing reproduction time information virtually identical to the reproduction time information in the header as a reference value, and non-reference frame data containing an offset value of the reproduction time information with respect to the reference value; and a non-reference packet having the header and the non-reference frame data, wherein said digital image data processing method is characterized by comprising: a decision step for deciding reproduction time information specific to the non-reference frame data by the use of the offset value with respect to the reference value contained in the non-reference frame data; a determination step for determining whether the decided specific reproduction time information is correct or not, and a calculation step for calculating the reference value contained in the reference frame data, corresponding to the non-reference frame data, if it has not been determined at this determination that the specific reproduction time information is correction impossible.

### BRIEF DESCRIPTION OF THE DRAWINGS

FIG. 1 is a functional block diagram showing an overall functional configuration of a one-segment receiver as one embodiment of the present invention.
FIG. 2 is an illustrative view showing a data structure in an MPEG2-TS system.
FIG. 3 is an illustrative view for describing a principle of image data processing.
FIG. 4 is a flowchart showing PTS calculation processing steps executed by a PTS creation part.

### EXPLANATION OF REFERENCE SIGNS

1 one-segment receiver (digital image data processing apparatus)
60 PTS creation part

### BEST MODE FOR CARRYING OUT THE INVENTION

The following describes an embodiment of the present invention with reference to accompanying drawings. In this embodiment, the present invention is applied to a one-segment receiver of a digital terrestrial broadcast using an MPEG2-TS system, as an example of a digital image data processing apparatus.

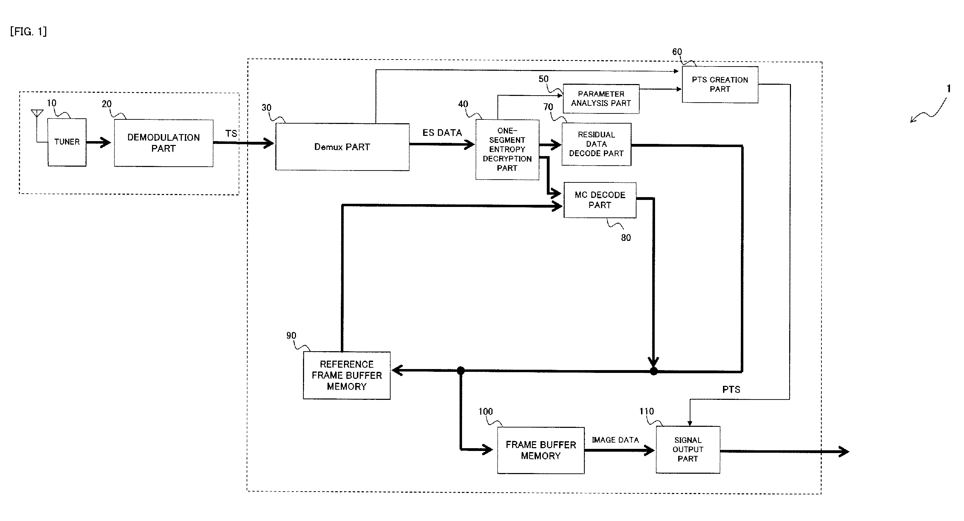

FIG. 1 is a functional block diagram showing an overall functional configuration of a one-segment receiver in this embodiment. In FIG. 1, the one-segment receiver 1 as a digital image data processing apparatus, comprises: a tuner 10 for receiving a video signal; a demodulation part 20 for subjecting the received video signal to OFDM demodulation, for example; a demultiplexer (demux) part 30 into which a transport stream (TS) is input from the demodulation part 20; a one-segment entropy decryption part 40 for analyzing ES data from the demux part 30; a parameter analysis part 50; a PTS creation part 60; a residual data decode part 70; an MC decode part 80; a reference frame buffer memory 90; a frame buffer memory 100; and a signal output part 110 for outputting final image data.

The demodulation part 20 performs channel decoding (demodulation) on a video signal received at the tuner 10, by a publicly known technique such as FFT, deinterleave, demapping or the like. On this occasion, when the demodulation part 20 has analyzed the demodulated received stream and determined that the stream contains simple moving picture information, the demodulation part 20 specifies a packet identifier (PID) of the simple moving picture through filtering. In addition, the demodulation part 20 retrieves the foregoing TS and stores the same in a predetermined TS buffer (which is not shown and may be located in the demodulation part 20 or the demux part 30).

The demux part 30 analyzes the TS packets from the TS buffer through an MPEG2-TS header analysis, and extracts a TS packet with the PID specified by the demodulation part 20. Thereafter, the demux part 30 extracts a packetized elementary stream (PES) from the extracted TS packet, further extracts a presentation time stamp (PTS) as reproduction time information from the PES through a PES header analysis, and outputs the PTS together with information indicative of a holding region of a corresponding elementary stream (ES), to the PTS creation part 60.

Meanwhile, the demux part 30 extracts a specific ES from the TS with the foregoing specified PID, and stores the ES in a predetermined ES buffer (which is not shown and may be located in the demux part 30 or the one-segment entropy decryption part 40). On this occasion, the demux part 30 always demultiplexes on a video picture ES and a time information (PCR) ES in a simple moving picture service.

The one-segment entropy decryption part 40 performs a syntax analysis of data momentarily stored in the ES buffer. Any access unit in which a PTS has failed to be acquired from the PES header at the demux part 30 is analyzed as a collection of data of functions constituting an NAL unit such as so-called SPS, PPS and SEI, at the parameter analysis part 50 (as described later in detail) to generate a PTS and supply the same to the PTS creation part 60.

The MC decode part 80 decodes the data input from the one-segment entropy decryption part 40 by AU (described later) with reference to a reference frame buffered in the reference frame buffer memory 90, and accumulates the decoded frames in the frame buffer memory 100. On this occasion, the frame buffer memory 100 also accumulates data decoded at the residual data decode part 70, on the basis of the data from the one-segment entropy decryption part 40.

The PTS creation part 60 includes a PTS holder and a PTS determiner, which are not shown in detail. The PTS holder holds the PTS extracted from the PES at the demux part 30, together with corresponding ES region information. The PTS determiner compares the PTS of the relevant image with the current time, evaluates the PTS of each access unit and the current time, and if any PTS indicates a time later than the current time, the PTS determiner generates an enable signal and outputs the same to the signal output part 110.

The signal output part 110 sends out image data, in accordance with the enable signal input from the PTS determiner in the PTS creation part on the basis of the PTS.

If any error has occurred in acquiring the PTS information for some reason, the PTS creation part 60 contained in the one-segment receiver 1 of this embodiment executes a process of re-calculating a correct PTS. The process will be described below in detail on a step-by-step basis.

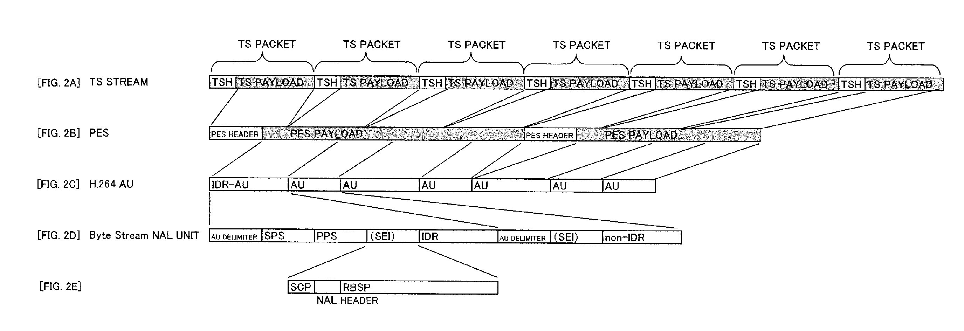

FIG. 2 is an illustrative view showing a data structure in an MPEG2-TS system. As shown in FIG. 2A, digital terrestrial broadcast data having undergone OFDM demodulation is generally provided in the form of an MPEG2-TS stream. This TS stream is composed of TS headers (TSHs) and TS payloads. Each TS payload can be further divided into streams at the demux part 30, by the use of information in the TSH (packet identifier: PID).

Then, as shown in FIG. 2B, only the TS payloads are collected from the TS stream to form PES packets (data packets) at the demux part 30. Each PES packet is composed of a PES header and a PES payload. The PES header contains PTS information and the like. The PTS in the PES header can be obtained by executing a predetermined process at the demux part 30.

The data format used in a one-segment broadcast is an H.264 coding scheme. As shown in FIG. 2C, generally in a digital terrestrial one-segment broadcast, one PES payload contains a plurality of H.264 access units (AUs). Here, an IDR-AU always comes first in a PES payload (along a time axis), but in some cases, a nonIDR-AU exists at the beginning of a PES payload. In addition, one PES payload may contain one H.264 AU or ten H.264AUs, depending on the one-segment broadcast standards.

The AU is formed by organizing several NAL units for making an access to each picture. The NAL unit constitutes a collection of data of H.264 functions and includes an AU delimiter, an SPS, a PPS, an SEI, an IDR, a nonIDR and the like, as shown in FIG. 2D. Further, these pieces of data each include an NAL header and RBSP data. Under the H.264 standards, a PTS offset value of each frame can be determined at the parameter analysis part 50, from a syntax element in the SEI and a syntax element in the SPS.

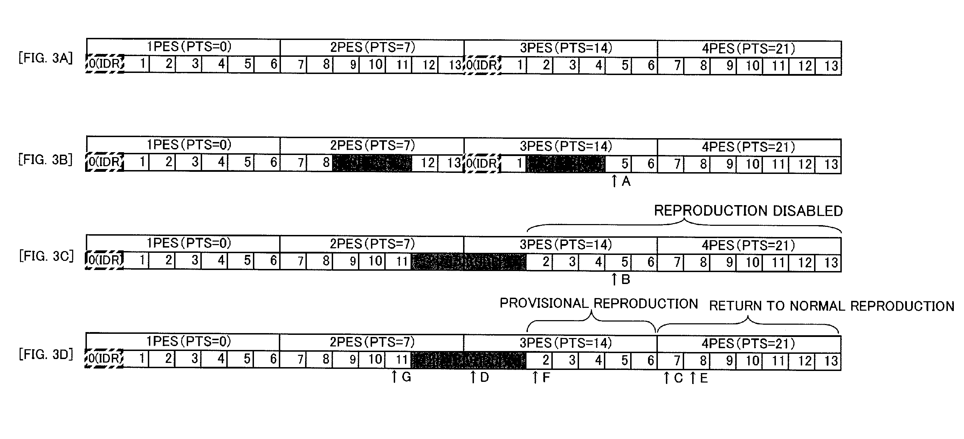

Then, a principle of image data processing in this embodiment will be described with reference to FIG. 3A to 3C.

FIG. 3A to 3C are conceptual illustrative views in which one PES contains n AU(s) (n denotes an integer number of 1 or more) at a non-fixed frame rate. The upper line in each of the figures represents PESs acquired at the demax part 30 and PTSs extracted by a PES header analysis. The lower line in the same is almost equivalent to the representation in FIG. 2C and describes alignment of AUs contained in the PESs. For easier comprehension, the numbers provided in the lower lines each denote both a PTS offset value determined at the decoder and a frame number.

In FIG. 3A, at the non-fixed frame rate, payloads in predetermined PESs as reference packets ("1PES" and "3PES" in the figure) each include at the beginning thereof an IDR-AU with an IDR (the offset value is shown as 0(IDR). That is, the IDR-AU uses the PTS of the PES header). Further, in each of AUs other than the IDR-AU, with reference to the PTS of the IDR-AU immediately preceding the AU along a time axis, only one offset value is contained in one frame with respect to the reference value. For example, the foregoing applies to the AUs with the numbers "1", "2", "3", "4", "5" and "6" contained in the PES payloads of the 1PES and the AUs with the numbers "7", "8", "9", "10", "11", "12" and "13" contained in the PES payloads of the 2PES. Although increments in the offset value are made uniform in the shown example for the purpose of simplified illustration, the actual increments may not be uniform.

FIG. 3A shows a normal state where the PTS reference values (= IDRs) from the IDR-AUs are acquired without any error and the offset values (difference values) contained in all the nonIDR-AUs other than the IDR-AUs are acquired without any error. In this case, it is possible to acquire all the PTSs in the AUs, including PES payloads in the PESs as non-reference packets ("2PES" and "4PES" in the figure) other than the reference packets, by the use of the offset values involved in all the nonIDR-AUs.

FIG. 3B shows a state where the PTS reference values (= IDRs) from the IDR-AUs are acquired without any error, whereas the offset values in some nonIDR-AUs are not acquired for some reason (in the figure, the AUs with the offset values "9", "10" and "11" in the PES payloads of the 2PES and the AUs with the offset values "2", "3" and "4" in the PES payloads of the 3PES. Refer to the shaded portions.).

In this case, PTSs of the two reference IDR-AUs (PTS = 0 and PTS =14) are acquired in the figure, and thus the PTS values of the nonIDR-AUs with normally acquired offset values can be normally generated without any problem, on the basis of the offset values and the reference values (PTS = 0 or PTS = 14). For example, the PTS of the "5" frame in the PES payloads of the 3PES, as shown by an arrow A in the figure, can be correctly determined as 19 (regardless of the situation where the PTSs in the "2", "3" and "4" frames are not be acquired) in such a manner as follows: since the PTS of the IDR-AU corresponding to the "5" frame in the 3PES has been correctly determined as 14, 6 is added to the PTS = 14.

FIG. 3C shows a case where the PTS reference value (= IDR) from the IDR-AU contained in the 3PES payloads is not acquired. In this case, for example, the PTS of the "5" frame in the PES payloads of the 3PES, as shown by an arrow B in the figure, cannot be correctly determined in such a manner as follows: since the PTS = 14 of the IDR-AU corresponding to the "5" frame in the 3PES is not acquired, the PTS value of the IDR-AU in the PES payloads of the preceding 1PES (PTS = 0) is used as a reference value, 5 is added to the PTS = 0, and thus the past value 5 is incorrectly deemed as the PTS value of the "5" frame (the correct value is 19). Accordingly, it is impossible to generate correct PTSs in the nonIDR-AUs until the PTS value of the next IDR-AU (e.g. the PTS of the IDR-AU in the PES payloads of the 5PES) is acquired, whereby reproduction is disabled.

In this embodiment, in such a case, monitoring is carried out until arrival of a boundary between the PES payloads in the 3PES and the PES payloads in the next 4PES, and then the PTS of the leading nonIDR-AU in the PES payloads of the 4PES (refer to an arrow C) is determined as 21 from the PES header (because the AU comes first in the PES), as shown in FIG. 3D. Incidentally, a boundary between one PES payload and the next PES payload can be determined by holding an address value of an ES data buffer located in a change position between the PESs, or embedding a unique code in ES data, or the like.

Then, an offset value = 7 actually acquired from this nonIDR-AU is subtracted from the PTS = 21 to determine correctly the PTS of the IDR-AU as 14, in the 3PES (refer to an arrow D). Therefore, based on the PTS = 14 of the IDR-AU in the 3PES, it is possible to calculate normally the PTS values of the subsequent AUs (the PTS values of the nonIDR-AU of "8" frame and subsequent AUs in the PES payloads of the 4PES. Refer to an arrow E) using the offset values of the nonIDR-AUs, thereby returning to normal reproduction.

Before the return to normal reproduction, the PTS of the AU of the "2" frame in the 3PES payloads (refer to an arrow F) which has not been correctly acquired due to occurrence of an error, is provisionally determined as 13, by setting the last-acquired correct PTS = 11 of the AU of the "11" frame in the 2PES payloads as a provisional reference value (refer to an arrow G) and adding the offset value to the provisional reference value. The same operation is carried out on the AUs of the "3", "4", "5" and "6" frames in the 3PES payloads. By this operation, it is possible to avoid a situation where a PTS is given a past value and cannot be reproduced, and provide provisional reproduction during the time prior to the return.

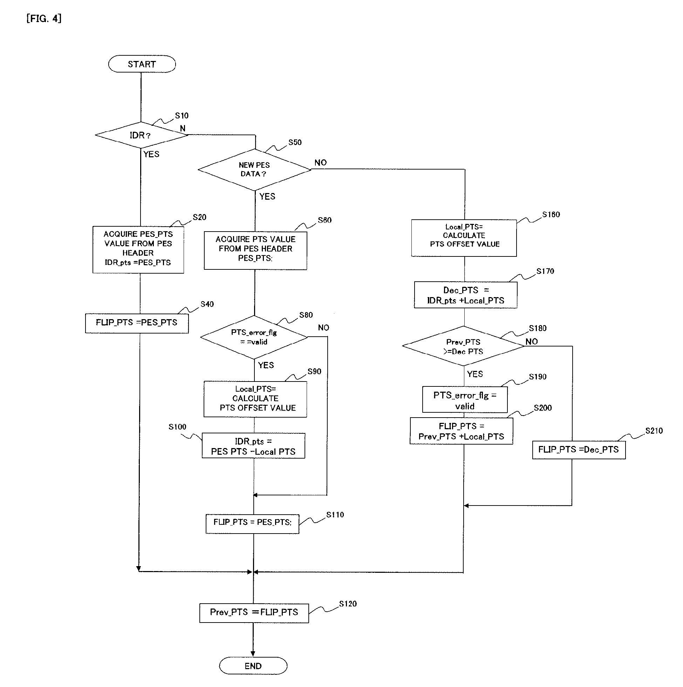

FIG. 4 is a flowchart showing a PTS calculation process that is executed at the PTS creation part 60 for operation in the foregoing manner. This embodiment is directed to a case where a frame rate is decided by an offset value from the PTS of an IDR, that is, a case where fixed_frame_rate_flag = 0 in the H.264 encoding system.

To start the flowchart, variable are defined beforehand as follows:
PES_PTS: PTS value acquired from a PES header;
Local_PTS: PTS offset value from IDR_pts determined by calculation with a syntax element of H.264;
FLIP_PTS: Actually used PTS (indicative of when a decoded image will be displayed);
IDR_pts: Variable for holding a PTS acquired from a PES header of an IDR picture (as a reference value for deriving PTSs of other pictures); and
Prev_PTS: PTS of a previous decoded picture.

First, at step S10, it is determined whether a picture (AU) to be decoded is an IDR-AU or not. Specifically, the determination may be made by the use of nal_unit_type in an NAL header, for example.

If the picture is an IDR-AU, the condition for determination is satisfied and then the process moves to step S20. At step S20, a PTS value (PES_PTS) is acquired from a PES header and held as IDR_pts indicative of the PTS value from the PES header in the IDR-AU.

Thereafter, at step S40, the foregoing PTS value (PES_PTS) at this point in time is placed as an actually used PTS (FLIP_PTS).

Then, since data of a plurality of frames exists in one PES payload in this process, the process moves from step S40 to step S120 to check which frame (AU) comes first in the PES payload. At this step, the foregoing FLIP_PTS value is set and held as PTS of the previous decoded picture (Prev_PTS), and this flow is terminated.

On the other hand, if it has been determined at step S10 that the picture to be decoded is a nonIDR-AU, the condition for determination is not satisfied and the process moves to step S50. At step S50, it is determined whether a new PES packet has come or not, by an appropriate method (in other words, it is checked whether or not there exists a boundary between adjacent PES packets). For example, a unique code may be embedded in advance in a change position between adjacent PESs of the ES data so that a decoder can detect the code and acquire a PTS of the latter picture from the PES header, which is deemed to be equivalent to execution of the foregoing determination.

If it has been determined at step S50 that a new PES packet has come (a first AU of a new PES has been found), the condition for determination is satisfied, a new PTS value is acquired from the PES header to update the data, and then the process moves to step S80.

At step S80, it is determined whether or not any error is contained in the PTS of the immediately preceding IDR-AU as a reference value, that is, whether or not PTS_error_flag = 1. If there is no error, the condition for determination is not satisfied and the process moves instantly to step S110. If there is any error, the condition for determination is satisfied and the process moves to step S90.

At step S90, a PTS offset value of the first AU in this new PES packet (Local_PTS) is calculated by the use of a syntax element parameter acquired from the ES data and the like.

Thereafter, the process moves to step S100 to calculate a PTS of the IDR-AU (IDR_pts) which is lost (has failed to be acquired due to the error) by subtracting the offset value calculated at step S90 from the PTS value at this point in time (PES_PTS). In such a manner as stated above, it is possible to calculate the reference PTS (which has failed to be acquired) by using the offset value of the syntax element and the PTS value of the PES header.

Since the IDR_pts can be thus acquired, the subsequent PTSs are returned to normal processing. At step S110, the PTS value at this point in time (PES_PTS) is placed as an actually used PTS (FLIP_PTS), as in the case at step S40, and the process goes through step S120 and then terminates this flow.

On the other hand, at step S50, if it has been determined that there is no first AU of a new PES, the process moves to step S160.

At step S160, a PTS offset value (Local_PTS) of the AU to be processed is calculated by syntax element data acquired from the ES data, as in the case at step S90.

Thereafter, the process moves to step S170 to calculate provisionally a PTS (Dec_PTS) of the AU being decoded, as sum of the PTS value from the PES header in the IDR-AU held at this point in time (IDR_pts) and the Local_PTS calculated at step S160. Then, the process moves to step S180.

At step S180, it is determined whether the value of the PTS (DEC_PTS) determined at step S170 is equal to or less than the PTS (Prev_PTS) of the previous decoded AU (picture). If DEC_PTS ≤ Prev_PTS, the condition for determination is satisfied, and it is deemed that the PTS of the picture being now decoded indicates a prior time as compared with the PTS of the previous picture and that the PTS of the IDR frame (IDR_pts) is dropped out due to occurrence of an error (in other words, an error is contained in the PTS of the IDR-AU as a reference value). The process thus moves to step S190 to make an error flag (PTS_error_flag) valid.

Thereafter, the process moves to step S200 to calculate provisionally the PTS of the decoded picture (FLIP_PTS) by setting the PTS of the immediately preceding picture (Prev_PTS) as a reference value and adding the PTS offset value (Local_PTS) determined from the syntax element to the reference value. Accordingly, the PTS does not indicate at least a prior time anymore, whereby it is possible to avoid a situation in which reproduction is completely disabled.

As an alternative method, the PTSs of pictures during the period of time when PTS_error_flag = 1 may not be calculated at this point in time such that the PTSs of these pictures will be created when the correct IDR_pts value has been acquired (any frame with an erroneous PTS is not output but stored temporarily in a memory).

Upon completion of step S200, the process goes through step S120 and then terminates this flow.

On the other hand, if it has been determined at step S180 that Dec_PTS > Prev_PTS, the condition for determination is not satisfied and the process moves to step S210 to place the Dec_PTS calculated at step S170 as an actually used PTS (FLIP_PTS). Then, the process goes through step S120 and terminates this flow.

In the foregoing process, step S170 of the flow shown in FIG. 4 constitutes decision means for deciding reproduction time information specific to non-reference frame data by the use of an offset value with respect to a reference value contained in the non-reference frame data, and step S180 constitutes determination means for determining whether the specific reproduction time information decided by the decision means is correct or not.

In addition, steps S50 to S100 constitute computation means for calculating a reference value contained in reference frame data, corresponding to the non-reference frame data, if the determination means has not determined that the specific reproduction time information is correction impossible.

Further, step S50 constitutes detection means for detecting a boundary between a plurality of data packets subsequent to the reference packet, if the determination means has determined that the reference value has failed to be acquired. Steps S60 and S90 constitute acquisition means for acquiring: the reproduction time information contained in the header of the data packet immediately subsequent to the boundary detected by the detection means; and the offset value of the non-reference frame data contained in the immediately subsequent data packet. Step S100 constitutes calculation means for calculating the reference value that has failed to be acquired from the reference frame data of the reference packet, by the use of the offset value acquired by the acquisition means and the reproduction time information in the header.

As described above, the digital image data processing apparatus 1 in this embodiment is a digital image data processing apparatus 1 for processing a stream (TS stream in this example) of a plurality of data packets (PES packets in this example) in which coded data is packetized in a variable-length manner, the plurality of data packets including: a reference packet having a header (PES header in this example) with reproduction time information (PTS in this example), reference frame data (IDR-AU in this example) containing reproduction time information virtually identical to the reproduction time information of the header (PES_PTS in this example) as a reference value (IDR_pts in this example), and non-reference frame data (nonIDR-AU in this example) containing an offset value (Local_PTS in this example) of the reproduction time information with respect to the reference value IDR_pts; and a non-reference packet having the header and the non-reference frame data (nonIDR-AU), the digital image data processing apparatus 1 comprising: decision means (step S170 in this example) for deciding reproduction time information (Dec_PTS in this example) specific to the non-reference frame data nonIDR-AU by the use of the offset value Local_PTS with respect to the reference value IDR_pts contained in the non-reference frame data nonIDR-AU; determination means (step S180 in this example) for determining whether the specific reproduction time information Dec_PTS decided by the decision means S170 is correct or not; and computation means (steps S50 to S100 in this example) for calculating the reference value IDR_pts contained in the reference frame data IDR-AU, corresponding to the non-reference frame data nonIDR-AU, if the determination means S180 has not determined that the specific reproduction time information Dec_PTS is correction impossible.

The digital image data processing apparatus in this embodiment (the one-segment receiver 1 in this example) digitally processes a stream (TS stream) of a plurality of data packets (PES packets) of coded data. The plurality of data packets include: a reference packet containing a header (PES header), reference frame data IDR-AU, and non-reference frame data nonIDR-AU; and a non-reference packet containing the header and the non-reference frame data nonIDR-AU. The reproduction time information PTS in the reference frame data IDR-AU is virtually identical to the reproduction time information PES_PTS contained in the corresponding header, and is contained as the reference value IDR_pts. The reproduction time information Dec_PTS specific to the non-reference frame data is decided by the decision means S170, which applies the offset value Local_PTS, contained in the non-reference frame data to the reproduction time information PES_PTS in the corresponding reference frame data IDR-AU.

If the reproduction time information PTS in the relevant reference frame data IDR-AU has not been normally acquired for some reason (= error occurrence), the reproduction time information Dec_PTS in the non-reference frame data nonIDR-AU decided under this condition by the decision means S170 is incorrect. When the determination means S180 has not determined that the Dec_PTS is correct, the computation means S50 to S100 calculates the reference value IDR_pts of the reference frame data IDR-AU corresponding to the non-reference frame data nonIDR-AU. By re-calculating correctly the reference value (reproduction time information) IDR_pts of the reference frame data as stated above, it is possible to re-decide correctly the reproduction time information Dec_PTS in the non-reference frame data nonIDR-AU by the decision means S170.

As a result, it is possible to return to normal processing on the frame data AUs subsequent to the non-reference frame data nonIDR-AU in which the reproduction time information PTS has been correctly determined as stated above, and reproduce normal video pictures. That is, if any error occurs in acquiring the reproduction time information PTS in certain reference frame data IDR-AU, it is possible to return more quickly to normal video picture reproduction, as compared with a conventional configuration in which normal video pictures cannot be reproduced until the reproduction time information PTS of the next reference frame data IDR-AU is acquired.

The digital image data processing method executed by the digital image data processing apparatus 1 in this embodiment is a digital image data processing method for digitally processing a stream (TS stream in this example) of a plurality of data packets (PES packets in this example) in which coded data is packetized in a variable-length manner, the plurality of data packets including: a reference packet having a header (PES header in this example) with reproduction time information (PTS in this example), reference frame data (IDR-AU in this example) containing reproduction time information virtually identical to the reproduction time information of the header (PES_PTS in this example) as a reference value (IDR_pts in this example), and non-reference frame data (nonIDR-AU in this example) containing an offset value (Local_PTS in this example) of the reproduction time information with respect to the reference value IDR_pts; and a non-reference packet having the header and the non-reference frame data (nonIDR-AU), the digital image data processing method comprising: a decision step (step S170 in this example) for deciding reproduction time information (Dec_PTS in this example) specific to the non-reference frame data nonIDR-AU by the use of the offset value Local_PTS with respect to the IDR_pts contained in the non-reference frame data nonIDR-AU; a determination step (step S180 in this example) for determining whether the decided specific reproduction time information Dec_PTS is correct or not; and a computation step (steps S50 to S100 in this example) for calculating the reference value IDR_pts contained in the reference frame data IDR-AU, corresponding to the non-reference frame data nonIDR-AU, if it has not been determined at this determination that the specific reproduction time information Dec_PTS is correction impossible.

In the digital image data processing method of this embodiment, a stream (TS stream) of a plurality of data packets (PES packets) of coded data is digitally processed. The plurality of data packets include: a reference packet containing a header (PES header), reference frame data IDR-AU, and non-reference frame data nonIDR-AU; and a non-reference packet containing the header and the non-reference frame data nonIDR-AU. The reproduction time information PTS in the reference frame data IDR-AU is virtually identical to the reproduction time information PES_PTS contained in the corresponding header, and is contained as the reference value IDR_pts. The reproduction time information Dec_PTS specific to the non-reference frame data is decided by applying the offset value Local_PTS contained in the non-reference frame data to the reproduction time information PES_PTS in the corresponding reference frame data IDR-AU.

If the reproduction time information PTS in the relevant reference frame data IDR-AU has not been normally acquired for some reason (= error occurrence), the reproduction time information Dec_PTS in the non-reference frame data nonIDR-AU decided under this condition at the decision step S170 is incorrect. When it has not been determined at the determination step S180 that the Dec_PTS is correct, the reference value IDR_pts of the reference frame data IDR-AU corresponding to the non-reference frame data nonIDR-AU is calculated at the computation step S50 to S100. By re-calculating correctly the reference value (reproduction time information) IDR_pts of the reference frame data IDR-AU as stated above, it is possible to re-decide correctly the reproduction time information Dec_PTS in the non-reference frame data nonIDR-AU.

As a result, it is possible to return to normal processing on the frame data AUs subsequent to the non-reference frame data nonIDR-AU in which the reproduction time information PTS has been correctly determined as stated above, and reproduce normal video pictures. That is, if any error occurs in acquiring the reproduction time information PTS in certain reference frame data IDR-AU, it is possible to return more quickly to normal video picture reproduction, as compared with a conventional method by which normal video pictures cannot be reproduced until the reproduction time information PTS of the next reference frame data IDR-AU is acquired.

In the digital image data processing apparatus 1 of the foregoing embodiment, the decision means S170 decides the reproduction time information Dec_PTS specific to the non-reference frame data nonIDR-AU, on the basis of the reference value IDR_pts calculated by the computation means S50 to S100.

After the computation means S50 to S100 has calculated correctly the reference value (reproduction time information) IDR_pts of the reference frame data IDR-AU, the decision means S170 re-decides correctly the reproduction time information Dec_PTS in the non-reference frame data nonIDR-AU on the basis of the calculated reference value IDR_pts. Accordingly, if any error occurs in acquiring the reproduction time information IDR_pts in certain reference frame data IDR-AU, it is possible to return to normal video picture reproduction in a quick and reliable manner, without having to wait until the reproduction time information IDR_pts in the next reference frame data IDR-AU is acquired.

In the digital image data processing method executed by the digital image data processing apparatus 1 in the foregoing embodiment, the reproduction time information Dec_PTS specific to the non-reference frame data nonIDR-AU is decided on the basis of the reference value IDR_pts calculated at the computation step S50 to S100.

After the reference value (reproduction time information) IDR_pts of the reference frame data IDR-AU has been correctly calculated at the computation step S50 to S100, the reproduction time information Dec_PTS in the non-reference frame data nonIDR-AU is correctly re-decided on the basis of the calculated reference value IDR_pts. Accordingly, if any error occurs in acquiring the reproduction time information IDR_pts in certain reference frame data IDR-AU, it is possible to return to normal video picture reproduction in a quick and reliable manner, without having to wait until the reproduction time information IDR_pts in the next reference frame data IDR-AU is acquired.

In the digital image data processing apparatus 1 of the foregoing embodiment, the determination means S180 determines whether or not the reference value IDR_pts has been acquired from the reference frame data IDR-AU, corresponding to the non-reference frame data nonIDR-AU in which the specific reproduction time information Dec_PTS has been decided, and the computation means S50 to S100 includes: detection means (step S50 in this example) for detecting a boundary between a plurality of data packets subsequent to the relevant reference packet, if the determination means S180 has determined that the reference value IDR_pts has failed to be acquired; acquisition means (steps S60 and S90 in this example) for acquiring: the reproduction time information PES_PTS contained in the header (PES header) of the data packet immediately subsequent to the boundary detected by the detection means S50; and the offset value Local_PTS of the non-reference frame data nonIDR-AU contained in the immediately subsequent data packet; and calculation means (step S100 in this example) for calculating the reference value IDR_pts that has failed to be acquired from the reference frame data IDR-AU of the reference packet, by the use of the offset value Local_PTS acquired by the acquisition means S60 and S90 and the reproduction time information PES_PTS in the header.

If the reproduction time information (reference value) IDR_pts in the reference frame data IDR-AU has not been normally acquired for some reason (= error occurrence), the reproduction time information Dec_PTS in the non-reference frame data nonIDR-AU decided under this condition by the decision means S170 is incorrect. In this embodiment, if the determination means S180 has determined that the reference value IDR_pts of the reference frame data has failed to be acquired, the detection means S50 contained in the computation means S50 to S100 detects a boundary between a plurality of data packets subsequent to the relevant reference packet. At this time, the header in the data packet immediately subsequent to the boundary contains the reproduction time information PES_PTS, and the acquisition means S60 and S90 acquire the reproduction time information PES_PTS in the header and the offset value Local_PTS of the non-reference frame data nonIDR-AU in the data packet. Then, the calculation means S100 applies the acquired offset value Local_PTS to the acquired reproduction time information PES_PTS in the header (subtraction in this example) to thereby calculate the reference value IDR_pts of the reference frame data IDR-AU (which has not been normally acquired) corresponding to the non-reference frame data nonIDR-AU.

By re-calculating correctly the reference value (reproduction time information) IDR_pts of the reference frame data IDR-AU in such a manner as stated above, it is possible to re-decide correctly the reproduction time information Dec_PTS of the non-reference frame data nonIDR-AU by the decision means S170.

As a result, it is possible to return to normal processing on the frame data AUs subsequent to the non-reference frame data nonIDR-AU in which the reproduction time information Dec_PTS has been correctly determined as stated above, and reproduce normal video pictures. Accordingly, it is possible to return to normal video picture reproduction more quickly, without having to wait until the reproduction time information IDR_pts of the next reference frame data IDR-AU is acquired.

In the digital image data processing method executed by the digital image data processing apparatus 1 of the foregoing embodiment, the determination step S180 is a step for determining whether or not the reference value IDR_pts has been acquired from the reference frame data IDR-AU, corresponding to the non-reference frame data nonIDR-AU in which the specific reproduction time information Dec_PTS has been decided, and the computation step S50 to S100 is a step for: detecting a boundary between a plurality of data packets subsequent to the relevant reference packet, if the determination means S180 has determined that the reference value IDR_pts has failed to be acquired; acquiring: the reproduction time information PES_PTS contained in the header (PES header) of the data packet immediately subsequent to the detected boundary; and the offset value Local_PTS of the non-reference frame data nonIDR-AU contained in the immediately subsequent data packet; and calculating the reference value IDR_pts which has failed to be acquired from the reference frame data IDR-AU in the reference packet, by the use of the acquired offset value Local_PTS and the reproduction time information PES_PTS in the header.

If the reproduction time information (reference value) IDR_pts in the reference frame data IDR-AU has not been normally acquired for some reason (= error occurrence), the reproduction time information Dec_PTS in the non-reference frame data nonIDR-AU decided under this condition at the decision step S170 is incorrect. In this embodiment, if it has been determined at the determination step S180 that the reference value IDR_pts of the reference frame data has failed to be acquired, first a boundary between a plurality of data packets subsequent to the relevant reference packet is detected at the computation step S50 to S100. At this time, since the header in the data packet immediately subsequent to the boundary contains the reproduction time information PES_PTS, then the reproduction time information PES_PTS in the header and the offset value Local_PTS of the non-reference frame data nonIDR-AU in the data packet are acquired. Then, by applying the acquired offset value Local_PTS to the acquired reproduction time information PES_PTS in the header (subtraction in this example), it is possible to calculate the reference value IDR_pts of the reference frame data IDR-AU (which has not been normally acquired) corresponding to the non-reference frame data nonIDR-AU.

By re-calculating correctly the reference value (reproduction time information) IDR_pts of the reference frame data IDR-AU in such a manner as stated above, it is possible to re-decide correctly the reproduction time information Dec_PTS of the non-reference frame data nonIDR-AU.

As a result, it is possible to return to normal processing on the frame data AUs subsequent to the non-reference frame data nonIDR-AU in which the reproduction time information Dec_PTS has been correctly determined as stated above, and reproduce normal video pictures. Accordingly, it is possible to return to normal video picture reproduction more quickly, without having to wait until the reproduction time information IDR_pts of the next reference frame data IDR-AU is acquired.

In the digital image data processing apparatus 1 of the foregoing embodiment, a data packet is a PES packet having, as a header, a PES header with a PTS as reproduction time information.

Accordingly, in digitally processing a stream of a plurality of PES packets each having a PES header with a PTS, even if the PTS reference value IDR_pts of the reference frame data IDR-AU has not been normally acquired for some reason (= error occurrence), it is possible for the decision means S170 to re-decide correctly Dec_PTS of the non-reference frame data nonIDR-AU, by re-calculating correctly the PTS reference value IDR_pts of the reference frame data IDR-AU.

The digital image data processing method executed by the digital image data processing apparatus 1 in the foregoing embodiment, uses as a data packet a PES packet having, as a header, a PES header with a PTS as reproduction time information.

Accordingly, in digitally processing a stream of a plurality of PES packets each having a PES header with a PTS, even if the PTS reference value IDR_pts of the reference frame data IDR-AU has not been normally acquired for some reason (= error occurrence), it is possible to re-decide correctly Dec_PTS of the non-reference frame data nonIDR-AU, by re-calculating correctly the PTS reference value IDR_pts of the reference frame data IDR-AU.

The one-segment receiver 1 in the foregoing embodiment is a one-segment receiver 1 for processing a TS stream of a plurality of PES packets in which coded data is packetized in a variable-length manner, the plurality of PES packets including: a reference packet having a PES header with a PTS, an IDR-AU containing reproduction time information virtually identical to a PES_PTS of the PES header as a reference value IDR_pts, and a nonIDR-AU containing an offset value Local_PTS of the PTS with respect to the IDR_pts; and a non-reference packet having the PES header and the nonIDR-AU, the one-segment receiver 1 including: step S170 for deciding a Dec_PTS specific to the nonIDR-AU by the use of the offset value Local_PTS with respect to the reference value IDR_pts contained in the nonIDR-AU; step S180 for determining whether the Dec_PTS decided at step S170 is correct or not; steps S50 to S100 for calculating the reference value IDR_pts contained in the IDR-AU, corresponding to the nonIDR-AU, if it has not been determined at step S180 that the Dec_PTS is correct.

In the one-segment receiver 1 of this embodiment, if the IDR_pts of the IDR-AU has not been normally acquired for some reason (= error occurrence), the Dec_PTS of the nonIDR-AU decided at step S170 under this state is incorrect. When it has not been determined at step S180 that the Dec_PTS is correct, the reference value IDR_pts of the IDR-AU corresponding to the nonIDR-AU is calculated at steps S50 to S100. By re-calculating correctly the reference value IDR_pts of the IDR-AU in such a manner as stated above, it is possible at step S170 to re-decide correctly the Dec_PTS of the nonIDR-AU.

As a result, it is possible to return to normal processing on the frame data AUs subsequent to the nonIDR-AU in which the PTS has been correctly determined as stated above, and reproduce normal video pictures. That is, if any error occurs in acquiring a PTS of a certain IDR-AU, it is possible to return to normal video picture reproduction more quickly, as compared with a conventional configuration in which it is impossible to reproduce normal video pictures until the reproduction time information PTS of the next IDR-AU is acquired.

The digital image data processing method executed by the one-segment receiver 1 in the foregoing embodiment is a digital image data processing method for processing a TS stream of a plurality of PES packets in which coded data is packetized in a variable-length manner, the plurality of PES packets including: a reference packet having a PES header with a PTS, an IDR-AU containing reproduction time information virtually identical to a PES_PTS of the PES header as a reference value IDR_pts, and a nonIDR-AU containing an offset value Local_PTS of the PTS with respect to the IDR_pts; and a non-reference packet having the PES header and the nonIDR-AU, the digital image data processing method including: step S170 for deciding a Dec_PTS specific to the nonIDR-AU by the use of the offset value Local_PTS with respect to the reference value IDR_pts contained in the nonIDR-AU; step S180 for determining whether the decided Dec_PTS is correct or not; and steps S50 to S100 for calculating the reference value IDR_pts contained in the IDR-AU, corresponding to the nonIDR-AU, if it has not been determined at this determination that the Dec_PTS is correct.

If the IDR_pts of the IDR-AU has not been normally acquired for some reason (= error occurrence), the Dec_PTS of the nonIDR-AU decided at step S170 under this state is incorrect. When it has not been determined at step S180 that the Dec_PTS is correct, the reference value IDR_pts of the IDR-AU corresponding to the nonIDR-AU is calculated at steps S50 to S100. By re-calculating correctly the reference value IDR_pts of the IDR-AU in such a manner as stated above, it is possible to re-decide correctly the Dec_PTS of the nonIDR-AU.

As a result, it is possible to return to normal processing on the frame data AUs subsequent to the nonIDR-AU in which the PTS has been correctly determined as stated above, and reproduce normal video pictures. That is, if any error occurs in acquiring a PTS of a certain IDR-AU, it is possible to return to normal video picture reproduction more quickly, as compared with a conventional method by which it is impossible to reproduce normal video pictures until the reproduction time information PTS of the next IDR-AU is acquired.

## Claims

1. A digital image data processing apparatus (1) for processing a stream of a plurality of data packets in which coded data is packetized in a variable-length manner,
said plurality of data packets including:
a reference packet having a header with reproduction time information, reference frame data (IDR-AU) containing reproduction time information virtually identical to said reproduction time information (PES_PTS) of said header as a reference value (IDR_pts), and non-reference frame data (nonIDR-AU) containing an offset value (Local_PTS) of said reproduction time information with respect to said reference value (IDR_pts); and
a non-reference packet having said header and said non-reference frame data (nonIDR-AU), wherein
said digital image data processing apparatus (1) is **characterized by** comprising:
decision means (S170) for deciding reproduction time information (Dec_PTS) specific to said non-reference frame data (nonIDR-AU) by the use of said offset value (Local_PTS) with respect to said reference value (IDR_pts) contained in said non-reference frame data (nonIDR-AU);
determination means (S180) for determining whether said specific reproduction time information (Dec_PTS) decided by said decision means (S170) is correct or not; and
computation means (S50 to S100) for calculating said reference value (IDR_pts) contained in said reference frame data (IDR-AU), corresponding to said non-reference frame data (nonIDR-AU), if said determination means (S180) has not determined that said specific reproduction time information (Dec_PTS) is correction impossible.

2. The digital image data processing apparatus (1) according to claim 1, **characterized in that**
said decision means (S170) decides reproduction time information (Dec_PTS) specific to said non-reference frame data (nonIDR-AU), on the basis of said reference value (IDR_pts) calculated by said computation means (S50 to S100).

3. The digital image data processing apparatus (1) according to claim 1, **characterized in that**
said determination means (S180) determines whether or not said reference value (IDR_pts) has been acquired from said reference frame data (IDR-AU) corresponding to said non-reference frame data (nonIDR-AU) in which said specific reproduction time infomation (Dec_PTS) has been decided, **characterized in that**
said computation means (S50 to S100) comprises:
detection means (S50) for detecting a boundary between a plurality of data packets subsequent to the reference packet, if said determination means (S180) has determined that said reference value (IDR_pts) has failed to be acquired;
acquisition means (S60 and S90) for acquiring said reproduction time information (PES_PTS) contained in said header of said data packet immediately subsequent to said boundary detected by said detection means (S50) and said offset value (Local_PTS) of said non-reference frame data (nonIDR-AU) contained in said immediately subsequent data packet; and
calculation means (S100) for calculating said reference value (IDR_pts) that has failed to be acquired from said reference frame data (IDR-AU) of said reference packet, by the use of said offset value (Local_PTS) acquired by said acquisition means (S60 and S90) and said reproduction time information (PES_PTS) in said header.

4. The digital image data processing apparatus (1) according to claim 1, **characterized in that**
said data packet is a PES packet having, as a header, a PES header with a PTS as reproduction time information (PES_PTS).

5. A digital image data processing method for digitally processing a stream of a plurality of data packets in which coded data is packetized in a variable-length manner,
said plurality of data packets including:
a reference packet having a header with reproduction time information (PTS), reference frame data containing reproduction time information virtually identical to said reproduction time information (PES_PTS) of said header as a reference value, and non-reference frame data (nonIDR-AU) containing an offset value (Local_PTS) of said reproduction time information (IDR-AU) with respect to said reference value (IDR_pts); and
a non-reference packet having said header and said non-reference frame data (nonIDR-AU), wherein
said digital image data processing method is **characterized by** comprising:
a decision step (S170) for deciding reproduction time information (Dec_PTS) specific to the non-reference frame data (nonIDR-AU) by the use of said offset value (Local_PTS) with respect to said reference value (IDR_pts) contained in said non-reference frame data (nonIDR-AU);
a determination step (S180) for determining whether said decided specific reproduction time information (Dec_PTS) is correct or not; and
a computation step (S50 to S100) for calculating said reference value (IDR_pts) contained in said reference frame data (IDR-AU), corresponding to said non-reference frame data (nonIDR-AU), if it has not been determined at this determination that said specific reproduction time information (Dec_PTS) is correction impossible.

6. The digital image data processing method according to claim 5, **characterized in that**
the reproduction time information (Dec_PTS) specific to said non-reference frame data (nonIDR-AU) is decided on the basis of said reference value (IDR_pts) calculated at said computation step (S50 to S100).

7. The digital image data processing method according to claim 5, **characterized in that**
said determination step (S180) is a step for determining whether or not said reference value (IDR_pts) has been acquired from said reference frame data (IDR-AU) corresponding to said non-reference frame data (nonIDR-AU) in which said specific reproduction time information (Dec_PTS) has been decided, **characterized in that**
said computation step (S50 to S100) is a step for:
detecting a boundary between a plurality of said data packets subsequent to the reference packet, if it has been determined at said determination step (S180) that said reference value (IDR_pts) has failed to be acquired;
acquiring said reproduction time information (PES_PTS) contained in said header of said data packet immediately subsequent to said detected boundary and said offset value (Local_PTS) of said non-reference frame data (nonIDR-AU) contained in the immediately subsequent data packet; and
calculating said reference value (IDR_pts) which has failed to be acquired from said reference frame data (IDR-AU) of said reference packet, by the use of said acquired offset value (Local_PTS) and said reproduction time information (PES_PTS) in said header.

8. The digital image data processing method according to claim 5, **characterized in that**
a PES packet having, as said header, a PES header with a PTS as said reproduction time information, is used as said data packet.
